# EUROPEAN PATENT APPLICATION

(11) **EP 1 335 232 A1**
(43) Date of publication of application: **13.08.2003**
(21) Application number: 02290291.0
(22) Date of filing: 07.02.2002
(51) Int. Cl.: G02B 26/02

(54) **Optical switching devices and methods of making them**

(71) Applicant: CORNING INCORPORATED, Corning, N.Y. 14831 (US)
(72) Inventor: Nicolas, Stéphane, 94430 Chennevieres sur Marne (FR); Renvazé, Christophe, 77210 Avon (FR)
(74) Representative: Poole, Michael John

(57) **Abstract**

An optical switch comprises at least one mirror (5) mounted on a platform (4) that is connected to a substantially rigid frame (1) by flexible tendons (6,7) that allow and constrain it to move in a straight path. The tendons are connected to the platform at positions spaced apart in the direction of the straight path whereby they will generate a correcting moment if the platform tends to tilt.

The device is usually applied to a micromechanical crossbar switch and in the simpler forms has one mirror for each intersection point, supported by its own platform.

The tendons are flexible enough to allow the required movement of the platform under the action of an actuator, but stiff enough to remain stationary unless actuated.

## Description

This invention relates to optical switching devices for changing the route of at least one beam of light and more especially to devices for switching a beam emerging from an optical fibre to couple it to a selected one of two or more other optical fibres. It is mainly concerned with micro-mechanical devices that may be suitable for use in telecommunications, data networks and optical data processing devices. It is primarily but not exclusively concerned with "cross-bar" switches in which any one fibre of a first set of optical fibres can be coupled to any one of a second set of optical fibres. It will be described mainly in relation to free-space switches but is also applicable to guided switches; guided switches will be rather easier to implement, because the dimensions required will normally be smaller.

Micromechanical optical switches, especially crossbar switches, have been proposed (for example in US-A-5960132) comprising at least first and second optical fibres, typically but not of necessity with collimator lenses, so arranged that the path of light associated with the first optical fibre intersects the path of light associated with the second optical fibre and in which a mirror is movable between an operative position in which it is interposed at the intersection point to deflect light coming from the first optical fibre to the second optical fibre and an inoperative position in which it does not change the path of the light. In the most basic form of switch, with only one mirror, there would normally be a third optical fibre positioned to receive the light beam from the first optical fibre when it is not deflected by the mirror.

In this known form of device, the mirror, or each of the mirrors, is hinged and in the inoperative position lies with its reflecting face parallel to and spaced from the plane of the two light beams. It has proved very difficult to implement such a design of switch, because the precision needed to ensure that the mirror is optically flat and precisely aligned in two planes is not readily achieved in any micro-mechanical hinge.

WO 00/75710 describes alternatives to hinged mounting for the mirror(s), and in particular (Figure 8 thereof) a switch in which at least one mirror is mounted on a platform that is connected to a substantially rigid frame by flexible tendons that allow it to move in a straight path between its operative and inoperative positions. However, although this arrangement permits the mirror to move along the desired line and is intended to constrain it to do so, it does not sufficiently ensure that it does so, because the tendons can bend and/or elongate unequally, allowing tilting of the platform and oblique movement, so that the mirror may not move to its operative position with sufficient accuracy.

In accordance with the invention, an optical switch comprising at least one mirror mounted on a platform that is connected to a substantially rigid frame by flexible tendons that allow and constrain it to move in a straight path is *characterised in that* the said tendons are connected to the said platform at positions spaced apart in the direction of the said path whereby they will generate a correcting moment if the platform tends to tilt.

By a "tendon" is meant a member that allows repeated movement of the platform under sufficient external forces but is stiff enough to resist unintended movement. The tendons will bend during movement of the platform and may also elongate or shorten, according to the direction of movement.

We expect that in most cases the platform will support only one mirror and that it will be moveable between an inoperative (retracted) position in which no light beam falls on it and a single operative position in which it deflects a light beam, but the invention includes other possibilities. For example:
(i) a platform may support two (or more) mirrors positioned to deflect different light beams in an operative position if it is desired to switch them always in synchronism; and/or
(ii) a platform may have two (or more) operative positions in which a single mirror deflects different light beams, with or without an inoperative position in which no beam is deflected; and/or
(iii) a platform may support two (or more) mirrors positioned to deflect the same light beam in different directions in different operative positions, with or without an inoperative position in which no beam is deflected.

As already indicated, the main application of the invention is to cross-bar switches in which there will be an array of n first optical fibres, an array of m second optical fibres and nm mirrors associated with unique intersections each corresponding to a different combination of collimators in the arrays: often n and m will be equal.

Crossbar switches are conceptually simplest and generally also easiest to implement if the two arrays are coplanar and perpendicular to each other, so that the mirrors are required, when operative, to produce a 90° deflections in the plane of the arrays and the invention will be described in relation to that conventional geometry, but it is to be noted that neither is a necessary limitation.

In the simplest forms of the invention, the platform would be supported by two equal straight tendons in diametrically opposite positions with respect to the centre of the mirror at each of the upper and lower levels; the lower tendons would either be aligned in the same direction as the upper ones (so lying directly beneath them) or preferably at 90° to them. Preferably the upper and lower tendons are also equal, and in that case if the four tendons all extend in the same direction they can be considered as approximating a parallelogram linkage (in this context, "equal" means equal in length and preferably also in elastic properties).

However, more complicated geometries may be needed to achieve the range of rectilinear movement required for particular applications or to preserve a desired balance of forces. In particular, we prefer to provide at least three tendons (more especially either three or four) at each of the upper and lower levels, and to distribute them uniformly about the centre of the mirror, with the tendons of the two layers either in the same angular positions or midway between the positions of those in the other layer.

Sinuous or generally non-linear tendons or tendons in the form of a mesh may be used, and a number of tendons functionally and optionally geometrically in parallel may be used at the upper and/or the lower level. It is also possible to have tendons at more than two levels.

The switches in accordance with the invention are preferably operated by conventional electromagnetic actuators, whose reliability is proven; but other operating means, such as the electrostatic actuation technique described in WO00/75710, piezoelectric, or even hydraulic, pneumatic or thermal operation are not excluded.

The invention includes methods of making the optical switches described by etching from at least one silicon wafer, and more especially from two such wafers which are bonded together after partial fabrication.

Preferably the method includes forming the or each mirror by etching to a selected crystal plane and metalising the etched surface with a metal appropriate to the optical wavelength at which the switch is to be used.

The invention will be further described, by way of example, with reference to the accompanying drawings in which:
Figure 1 is an isometric sketch of a simple 2 by 2 crossbar switch in accordance with the invention;
Figure 2 is a partial and simplified cross-section through the switch of Figure 1;
Figures 3 and 4 are fragmentary enlarged plan views showing alternative design features;
Figure 5 shows at (a) to (c) successive stages in one method of making a switch in accordance with the invention;
Figure 6 shows at (a) to (c) corresponding stages in an alternative method of making a switch in accordance with the invention;
Figure 7 shows at (a) to (v) successive steps in a particular implementation of the method of Figure 5;
Figures 8, 9 and 10 show respectively at (a) to (d), (a) to (f) and (a) to (d) successive steps in a particular implementation of the method of Figure 6;
Figure 11 shows at (a) to (c) selected steps in an alternative method in accordance with the invention;
Figure 12 is a diagrammatic perspective view of the distinctive parts of an optical switch made by the method of Figure 11; and
   each of Figures 13-16 is a diagrammatic view illustrating different distribution of tendons.

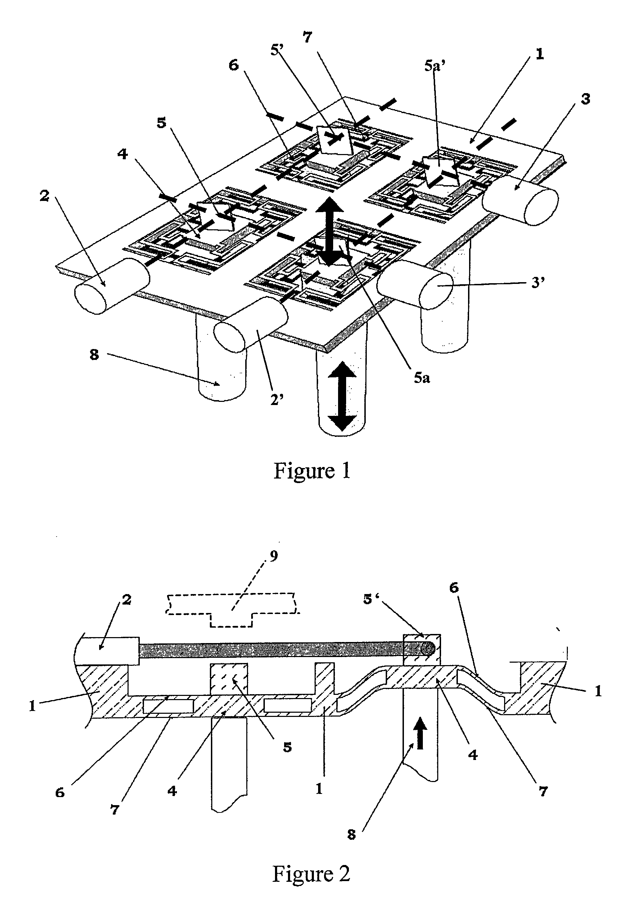

The switch shown in Figures 1 and 2 comprises a rigid rectangular frame 1 supporting a first array of two optical fibres 2, 2' on one of its shorter edges and a second array of two optical fibres 3, 3' on one of its longer edges. These are preferably all fitted with collimators, which may be of any known kind(s): thus they may be formed by one or more lenses aligned with the end of the fibre they serve; preformed lenses spliced by fusion or an adhesive to the end of the fibre (with or without additional aligned lenses); or lenses formed by fusing the end of the fibre, or a transparent extension to the fibre end, and shaping it by surface tension or by moulding (again with or without additional aligned lenses). It is particularly preferred to use one linear-bar collimator for each array to which all the fibres of the array are fusion pigtailed, so that alignment of the collimator to the switch is simplified.

Each optical fibre defines an optical axis, represented in heavy dashed lines, and at each of the four places where a pair of these axes intersect, a platform 4, attached to but moveable with respect to the base-plate 1 in a manner to be described, supports a mirror 5, 5', 5a, 5a', inclined at 45° to both the axes and intersecting them when in the operative position in which they are drawn. They may, however, in accordance with the invention, be selectively moved by rectilinear translation, downwards as drawn, to inoperative positions in which they are below the top surface of the base-plate.

For the purpose of illustration, it will be assumed that light enters through optical fibres 2 and 2' and leaves by optical fibres 3 and 3'. In the most usual operation of this switch, either mirrors 5 and 5a' will be in operative positions and mirrors 5' and 5a in inoperative positions, or vice versa. In the former position, light entering by collimator 2 will be reflected to collimator 3' and light entering by collimator 2' will be reflected to collimator 3; but in the second position, light entering by collimator 2 will be reflected to collimator 3 and light entering by collimator 2' will be reflected to collimator 3'.

The mounting and actuation of the mirrors will be best understood by referring next to Figure 2, which is a diagrammatic vertical section containing the optical axis of collimator 2, showing mirror 5 in its inoperative position and mirror 5' in its operative position. Each of the platforms 4 is connected to the frame 1 by tendons 6 at about the level of the top of the frame and tendons 7 at about the level of the bottom of the frame; as drawn in Figure 2 these are plain linear tendons monolithically connected to both the frame and the platform, but if (as is often likely to be the case) this does not permit sufficient movement, a more complex geometry may be used: by way of example, Figure 1 shows angular sinuous tendons 6. For simplicity in ensuring lateral forces always remain balanced, the tendons at the upper and lower levels are substantially identical in all respects (in particular, shape, dimensions and material, and therefore in elastic properties) and those in each layer are symmetrically arranged about the axis of their platform. The platforms are raised when required by actuators 8 which may be operated in any conventional manner: they are also lowered by them, unless the resilience of the tendons is sufficient to make it unnecessary.

If desired, an abutment member 9 may be added to engage the mirror 5 when in its operative position, as an additional aid to ensuring that the platform 4 is not tilted when it is fully raised and that the mirror is correctly oriented.

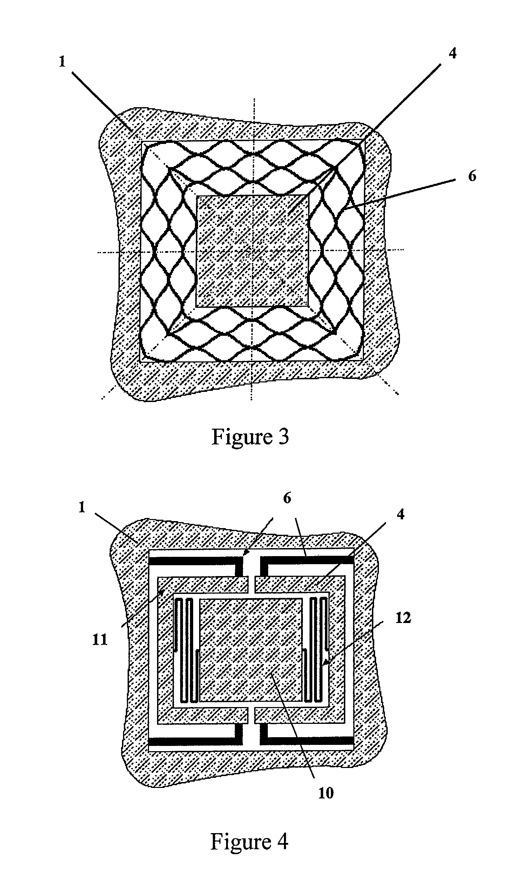

Figure 3 shows an alternative approach to the design of the tendons (as seen, 6: tendons 7 are concealed below them and of identical structure). They take the form of a net of many intersecting members of relatively small cross-section. This is expected to reduce the risk that manufacturing variations will result in deleterious assymetry.

It is expected that it will be easier to fabricate tendons with a width in the plane of the frame that is substantially greater than their thickness normal to that plane, and on this basis, Figure 4 illustrates one way in which the need for either stretching or substantial edgewise bending of any tendons is avoided: the platform 4 comprises a central block 10 (to support the mirror) mounted in a two-part rigid subframe 11, and the subframe is connected in accordance with the invention by tendons 6 and 7 (not visible) to the frame 1 and by auxiliary tendons 12 to the central block. The actuator 8 is shaped to act only on the subframe 11 and so the auxiliary tendons 12 are subjected to no substantial forces except the tension arising from the slight separation of the halves of the subframe as it rises: they may (among other possibilities) be in upper and lower layers like the tendons 6 and 7 or may extend the whole depth of the frame.

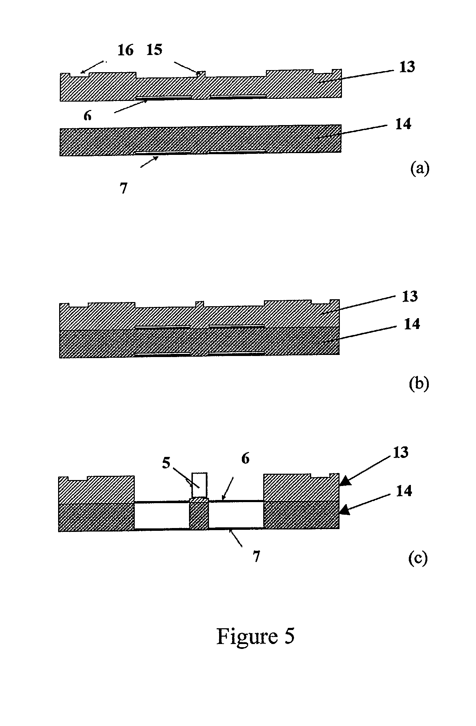

Figure 5 outlines a first technique for the manufacture of one module of a freespace optical switch in accordance with the invention. The figure shows diagrammatic sections on the (111) plane of two <110> oriented silicon wafers 13 and 14. The upper face of the first wafer 13 is appropriately prepared (one way of doing so will be described later) for the formation of a mirror at 15 and grooves for optical fibres (and preferably for collimator lenses) at 16; the lower faces of both wafers 13 and 14 are formed with respective tendons 6 and 7 (stage (a)). Next, while still robust, the two wafers are bonded together (stage (b)). Finally, the wafers are wet etched along one of the (111) planes to fully form the mirror 5 and selectively etched away so that the platform 4 is connected to the surrounding frame 1 only by the tendons 6 and 7.

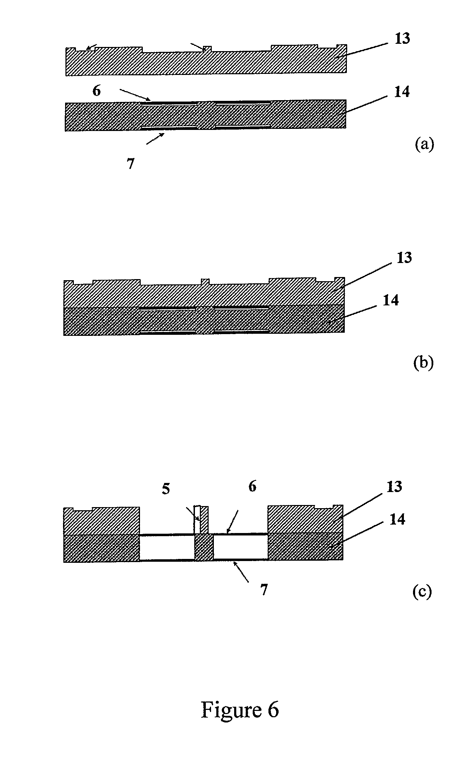

Figure 6 shows a variant of this process which differs only in that the tendons 6 are formed in the upper face of the lower wafer 14 instead of the lower face of the upper wafer 13.

If it is desired to make the tendons (6 and 7) of a material other than the silicon or other substrate material, they may be formed by any appropriate selective coating (printing) process, or by overall coating followed by pattern etching, according to techniques known in the semiconductor and micromechanical machining arts.

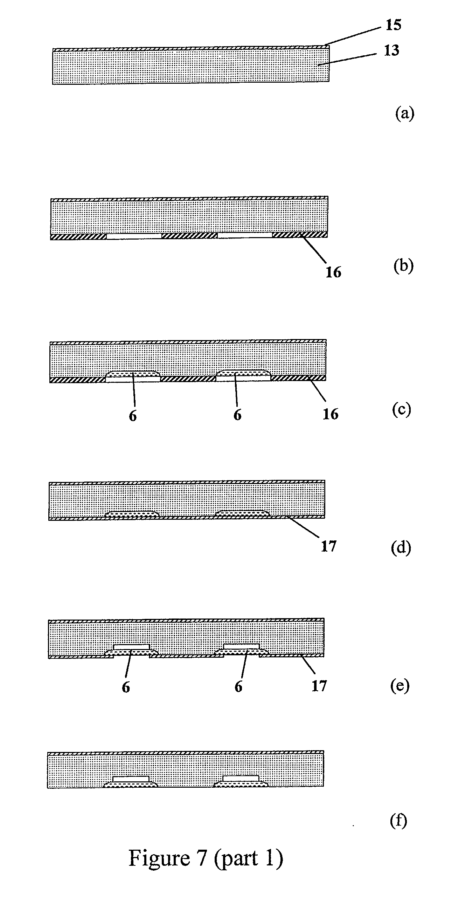

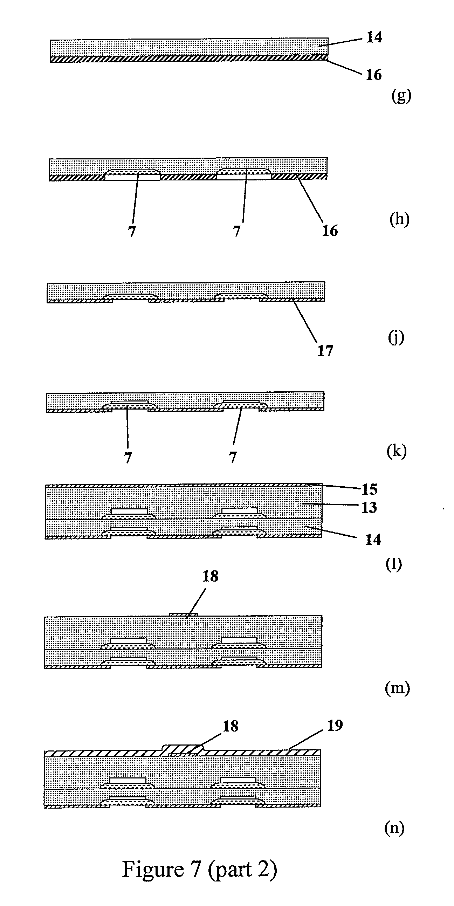

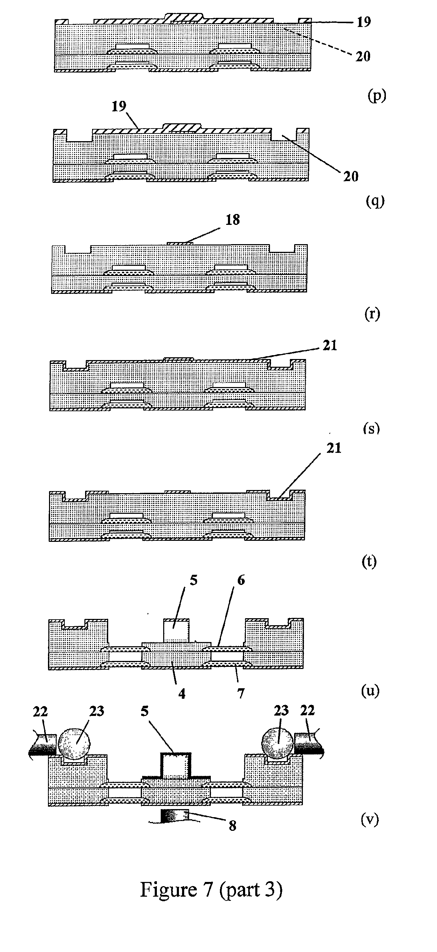

Figure 7 illustrates successive steps in one practical implementation of the fabrication technique that was outlined in figure 5. One side of wafer 13 (1mm thick) is first masked by coating all over with silicon nitride (step (a)) and on the other side patterned with a diffusion mask 16 corresponding to the desired tendon structure (step (b)). Boron, and optionally germanium, is diffused into the exposed silicon area (the area of the tendons 6) in a furnace, respectively to obtain etch resistance and stress control (step (c)). The patterned diffusion mask 16 is now removed and the surface coated all over with a silicon nitride etching mask 17 (step (d)) which is patterned to expose areas of silicon adjacent to the boron-diffused areas - by aligning the pattern with the underlying crystal structure of the silicon, anisotropic etching with potassium hydroxide can be used to etch substantially vertically into the wafer; selective wet-etching then allows the tendons 7 to be under-etched and thus freed from the substrate (step(e)), after which the mask 17 is removed (step (f)).

A second wafer 14, 200 µm thick, is processed on one side (its underside) in exactly the same way (steps (g) to (k)) and the two wafers are accurately aligned and bonded together (step (1)); known techniques of anodic bonding or of bonding by heat-treatment in the presence of water can be used.

The silicon nitride etching mask 15 on the top face of the upper of the bonded wafers is now patterned in alignment with the crystal planes leaving an island 18 that will eventually define the position of the mirror (step (m)), and a fresh etching mask 19 applied to the top surface overall (step (n)); this mask may (among other available etching mask materials) be a photoresist or silicon nitride and is patterned (step (p)) to define whatever grooves and/or pits 20 are needed for locating and aligning optical fibres and/or lenses, and these are then developed by wet or dry etching (step (q)).

This patterned mask 19 is now removed, leaving island 18 in place by virtue of its different material and/or greater thickness (step (r)) and a new overall silicon nitride or photoresist coating 21 for wet etching applied (step(s)). This is patterned in alignment with the crystal planes (step (t)) and the product is now ready for final etching. This is done by wet etching with potassium hydroxide at least in the region of the mirror 5, where its selective etching to the (111) crystal plane is needed, and the region of the tendons, where the resistance to etching of boron-diffused silicon is relied on. If desired, dry etching by the established reactive ion etching (RIE) or inductive coupled plasma (ICP) techniques can be used elsewhere. The platform 4 is thus separated from the frame 1, except for its support by the upper tendons 6 and lower tendons 7 (step (u)).

Finally the mirror 5 is suitably metallised - for 1550 nm telecommunication wavelengths, suitably with either gold or aluminium and, normally after separating multiple items by dicing or by fracturing along pre-etched boundary lines, fibre collimators represented by fibres 22 and spherical lenses 23 are bonded into their prepared positions.

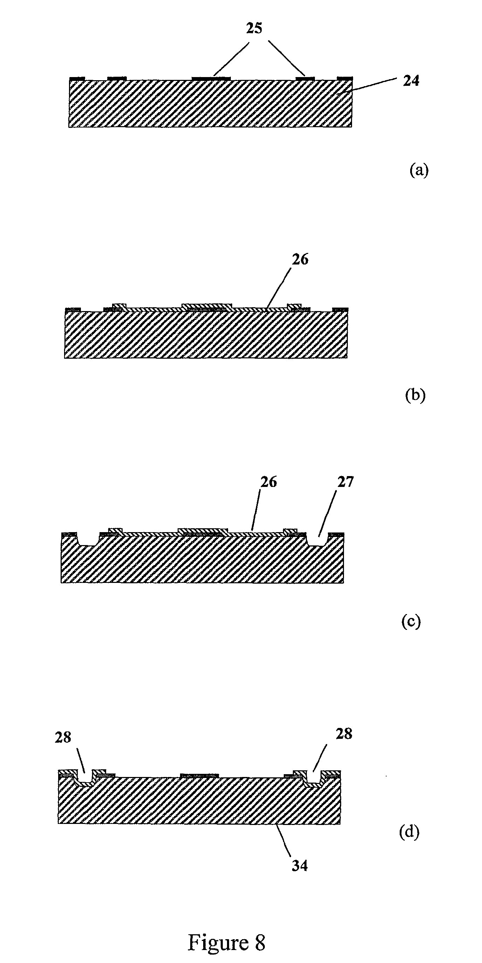

Figures 8-10 illustrate an alternative manufacturing technique, among other changes following the outline of Figure 6. Figure 8 shows steps in the preparation of a first wafer 24, which is first coated with silicon nitride 25 and patterned to define positions of the mirror and slots and/or pits for fibres and optional lenses (step (a)). The mirror area is protected with a photoresist 26 (step (b)) and the grooves and/or pits 27 dry etched with RIE or ICP (or if preferred could be wet etched) (step (c)). The photoresist 26 is removed and silicon nitride (or other coating resistant to potassium hydroxide) 28 applied and patterned to protect the grooves and/or pits (step (d)).

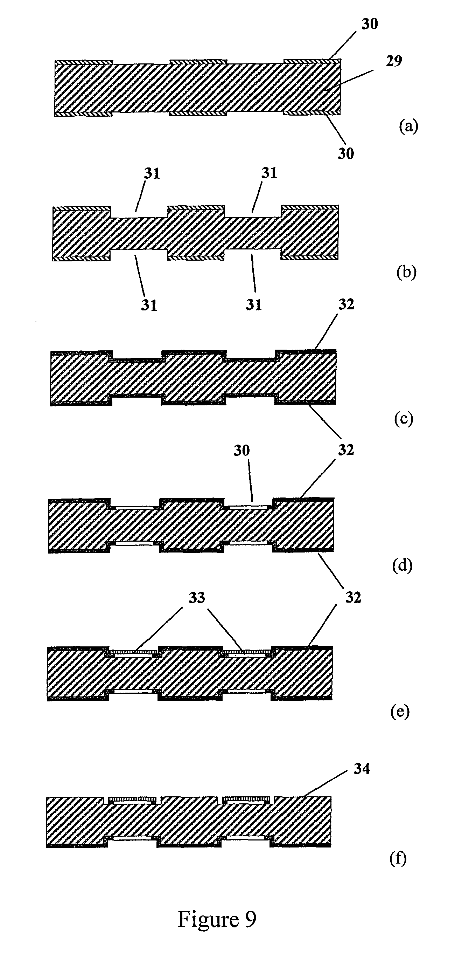

Meanwhile, a second wafer 29 is prepared as shown in Figure 9. First a resist 30 is applied and patterned on both sides and shallow recesses 31 are dry or wet etched (steps (a) and (b)). The resist 30 is removed and silicon nitride 32 coated overall on both sides (step (c)); this is patterned in the base of each recess to define tendons, a requirement of this technique being that the tendons are not aligned with underlying crystal planes but the outlines around them are (step (d)). Photoresist 33 is applied to one face only, shown as the upper face, and patterned to protect the bases of the recesses on that face (step (e)) to allow the silicon nitride 32 to be removed from that face of the wafer while remaining in place in the recesses.

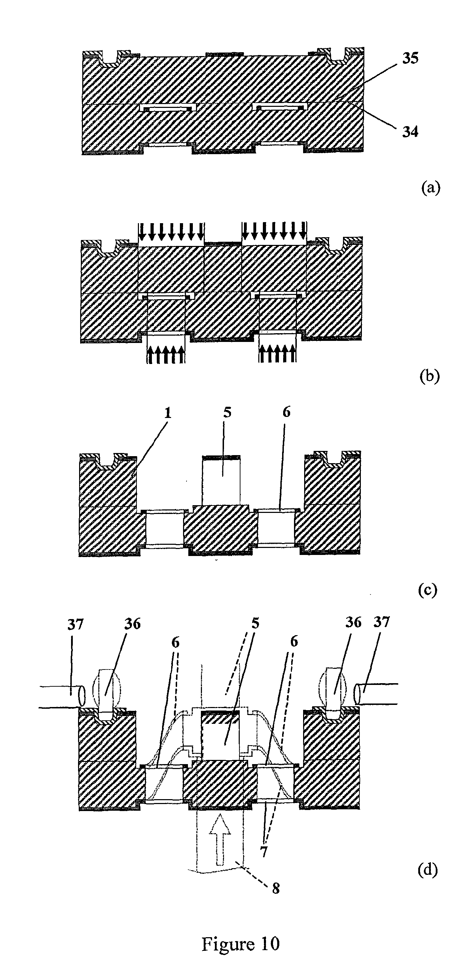

The so-exposed face 33 of this wafer 29 is next bonded to the plain underface 34 of the first wafer 24 (Figure 10, step (a)) and the assembly wet etched with potassium hydroxide from both sides; in this etching, the edges that are aligned with crystal planes are anisotropically etched to produce faces substantially perpendicular to the major faces of the wafers, but the edges of the tendons 6 and 7, not being so aligned, are undercut to free them from the substrate. Otherwise, the wafers are etched right through to free the platform 4 (steps (b) and (c)); metalising of the mirror 5, dicing and addition of collimator lenses 34 and optical fibres 35 completes the switch (step (d)).

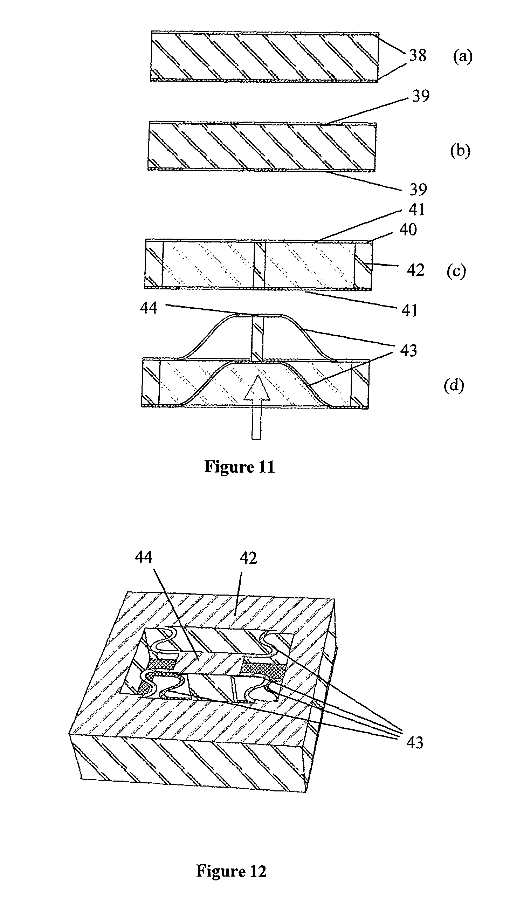

Figures 11 and 12 illustrate an alternative manufacturing process which can be described quite briefly, since many of its steps are the same as for the process described and/or are known *per se.* In this process, only one chip is used in order to avoid the need for bonding chips together, and is processed identically on its two major faces. It is coated with photoresist 38 (stage (a)) which is patterned and developed to expose the chip surface through apertures 39 where the tendons are required (stage (b)); ion implantation is then used to introduce boron and/or germanium into the exposed parts of the chip surfaces. The photoresist is then removed, and a silicon nitride layer 40 applied and patterned to expose areas 41 whose edges are generally aligned with the crystal structure and which define the parts of the chip between the frame 42 and the implanted area, plus the edges of the implanted area. The chip is now etched with KOH (stage (c)), and since the implanted areas are relatively resistant to etching, enough of them remains to form tendons 43, which are seen at stage (d) with the platform 44 in its actuated position and in Figure 12 in its inactive position.

A modification of this process (not separately illustrated) provides for the use of metallic tendons. Silicon nitride is first applied and patterned to leave a protective coating over the area of the frame, and optionally the area of the tendons. A thin "seed layer" of gold is applied overall (preferably over one or more very thin layers selected to promote adhesion, e.g. a chromium layer), and then a thick photoresist layer is applied and patterned to form holes (exposing the gold surface) where the tendons are to be formed. More gold is applied by electroplating until the holes in the photoresist are nearly filled. The photoresist is removed and the part of the gold seed layer exposed by its removal etched away, leaving only the tendons as metallic parts. Since the gold is inherently resistant to KOH (other metals, if used as alternatives, may require protection), it is easy to under-etch the tendons and remove the unwanted material between them and the frame.

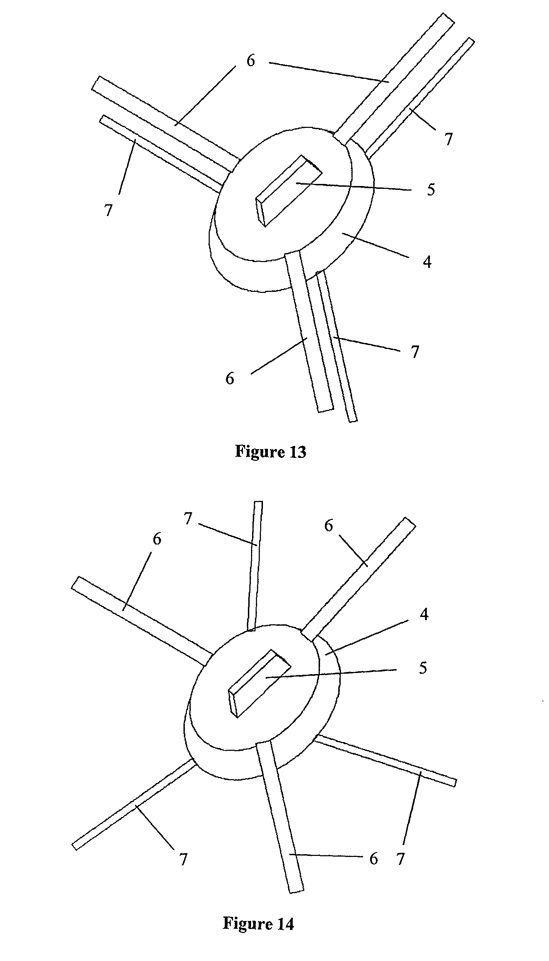

Figures 13-16 illustrate some of the many tendon geometries that are suitable for use in applying the invention. For ease of understanding, tendons in the lower layer have been drawn as if they were smaller in cross section than those in the upper layer; in practice equal cross-sections will normally be preferred.

In the geometry of Figure 13, the platform 4 that supports the mirror 5 is mounted from a surrounding rigid frame (not shown) by three tendons 6 which are coplanar and distributed uniformly (that is at 120° to each other) in the upper layer and three tendons 7 similarly distributed in the lower layer and each lying under one of those in the upper layer. Figure 14 is similar, except that the tendons 7 in the lower layer are each located midway between two of those in the upper layer (at 60° to each of them). The geometry of Figure 14 is thought to give the best control obtainable with only three tendons in each layer, and that of Figure 13 is considered rather easier to fabricate. These geometries are best suited to hexagonal, rather than rectangular, switch arrays.

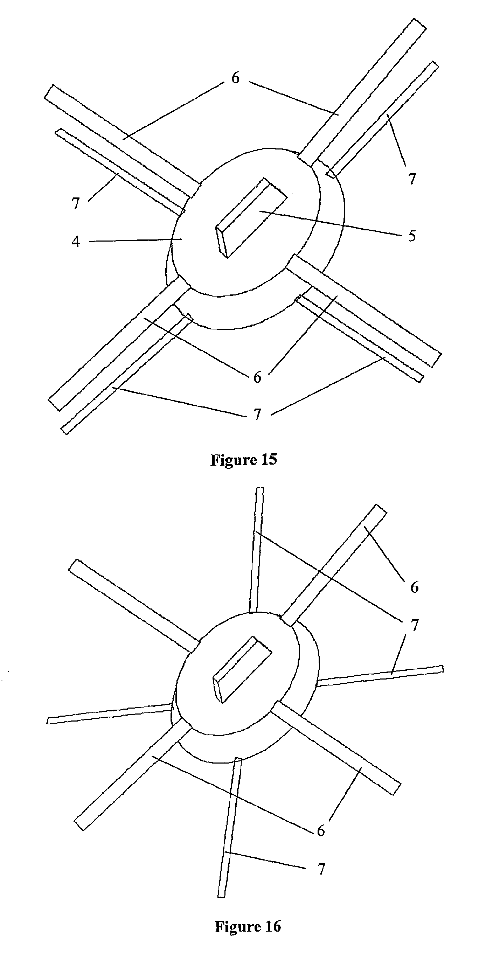

Figures 15 and 16 are similar to Figures 13 and 14 respectively, except that they have four tendons in each layer. They are likely to be preferred for rectangular switch arrays.

The orientation of the tendons relative to the mirror can be optimized to minimize rotation on a chosen axis (notably the axis perpendicular to the light paths) at the cost of having more rotation around one or more axes (notably the axis perpendicular to the mirror surface) less important for the optical function of the mirror. Computer modeling could be used to chose the best configuration.

To illustrate the use of the invention in a guided optical crossbar switch, as distinct from a free-space one, it is proposed that the required fibres should be aligned by means of grooves in a suitable substrate chip formed with channels in the area of the beam intersections that can be filled with an index-matching liquid. To minimise risk of spillage, the channels would be formed in the top face of the chip, and one of the mirror-support structures already described applied the opposite way up to the drawings, so that in their actuated positions the mirrors dip into the liquid.

*Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.*

## Claims

1. An optical switch comprising at least one mirror mounted on a platform that is connected to a substantially rigid frame by flexible tendons that allow and constrain it to move in a straight path ***characterised in that*** the said tendons are connected to the said platform at positions spaced apart in the direction of the said path whereby they will generate a correcting moment if the platform tends to tilt.

2. An optical crossbar switch in accordance with claim 1 having an array of n first optical fibres, an array of m second optical fibres and nm mirrors associated with unique intersections each corresponding to a different combination of collimators in the arrays.

3. An optical crossbar switch as claimed in claim 2 in which n and m are equal.

4. An optical crossbar switch as claimed in claim 2 or claim 3 in which the two arrays are coplanar and perpendicular to each other, and in which the mirrors, when operative, produce a 90° deflections in the plane of the arrays.

5. An optical switch as claimed in any one of claims 1-4 in which the platform is supported by two equal straight tendons in diametrically opposite positions with respect to the centre of the mirror at each of the upper and lower levels.

6. An optical switch as claimed in claim 5 in which the lower tendons are aligned in the same direction as the upper ones (so lying directly beneath them).

7. An optical switch as claimed in claim 5 in which the lower tendons are aligned at 90° to the upper ones.

8. An optical switch as claimed in any one of claims 5-7 in which the upper and lower tendons are also equal.

9. An optical switch as claimed in any one of claims 1-4 in which there are at least three tendons at each of the upper and lower levels, distributed uniformly about the centre of the mirror.

10. An optical switch as claimed in claim 9 in which there are exactly three or exactly four tendons at each level.

11. An optical switch as claimed in claim 9 or claim 10 in which the tendons of the two levels are in the same angular positions.

12. An optical switch as claimed in claim 9 or claim 10 in which the tendons of each of the two levels are midway between the positions of those at the other level.

13. An optical switch as claimed in any one of claims 1-12 in which at least one of the tendons is sinuous.

14. An optical switch in accordance with any one of claims 1-12 having tendons in the form of a mesh.

15. An optical switch as claimed in any one of claims 1-14 in which the said platform comprises a central block connected by auxiliary tendons to a two-part subframe.

16. An optical switch as claimed in any one of claims 1-15 comprising electromechanical actuators.

17. An optical switch in accordance with any one of claims 1-16 in which the or each platform supports only one mirror and is movable between a single operative position in which its mirror deflects a light beam and an inoperative position in which it does not.

18. A freespace optical switch in accordance with any one of claims 1-17.

19. A method of making an optical switch in accordance with claim 1 comprising etching from at least one silicon wafer.

20. A method in accordance with claim 19 comprising using two silicon wafers and bonding them together after partial fabrication.

21. A method in accordance with claim 19 comprising etching from a single silicon wafer.

22. A method in accordance with any one of claims 19-21 comprising forming the or each mirror by etching to a selected crystal plane and metalising the etched surface.

23. A freespace optical crossbar switch substantially as described with reference to Figure 1 or Figure 2 or to both of those figures, or to figure 3 or Figure 4, or to Figure 12 or to any one of Figures 13-16.

24. A method of making an optical switch substantially as described with reference to Figure 5 or Figure 6 or to Figures 5 and 7 or to Figures 6 and 8-10 or to Figure 11.
